# DEMANDE DE BREVET EUROPEEN

(11) **EP 1 264 714 A1**
(43) Date de publication de la demande: **11.12.2002**
(21) Numéro de dépôt: 00912673.1
(22) Date de dépôt: 30.03.2000
(51) Int. Cl.: B60G 11/113

(54) **SYSTEME DE FIXATION DE RESSORT SUR UN ESSIEU D'AUTOMOBILE ET RESSORT POUR ESSIEU D'AUTOMOBILE**

(30) Priorité: 14.03.2000 ES 200000618
(71) Demandeur: Fundiciones De Vera, S.A., 31780 Vera de Bidasoa (ES)
(72) Inventeur: ENCIO MARTINEZ, Jose, Luis, E-31780 Vera de Bidasoa (ES)
(74) Mandataire: Urizar Barandiaran, Miguel Angel
(86) Numéro de dépôt international: ES0000115
(87) Numéro de publication internationale: WO01068389

(57) **Abrégé**

Système d'attache d'un ressort à lame à un essieu de véhicule et ressort à lames pour essieu de véhicule, de ceux où, dans une représentation des coordonnées, le ressort est représenté par l'axe des coordonnées OX et l'essieu du véhicule par l'axe des coordonnées OZ, et qui se compose de deux brides qui sont unies de façon rigide, et unies entre elles par des moyens vissés qui traversent le corps du ressort qui demeure fixé entre les deux brides, selon l'axe OZ.

Applicable à la suspension de véhicules.

## Description

Dans un système de coordonnées, le ressort à lames constitue l'axe OX et l'essieu du véhicule l'axe OZ.

Le système actuel d'attache des ressorts à lames à l'essieu consiste dans l'assujettissement de ceux-ci au moyen de plaques de bridage, serrées par des goujons ou des colliers qui entourent l'essieu de telle sorte que le serrage soit perpendiculaire, suivant l'axe OY.

Ce système est constitué par une plaque de bridage supérieure, une inférieure, les colliers et des écrous et rondelles et autres plaques complémentaires.

Le nombre des pièces qui interviennent dans la fixation est excessif, ce qui crée des problèmes de logistique de stockage-montage, de poids et de prix.

La fixation du ressort à lames s'effectue en assujettissant fortement celui-ci par la face de traction, d'où, par conséquent, l'importance des mesures et des tolérances de celle-ci dans la zone d'attache, autrement dit dans la zone plate et large du ressort.

Cette attachedonne lieu à un fort bridage entre le ressort à lames et l'essieu, une grande transmission d'efforts à l'axe ayant lieu par l'intermédiaire de ce bridage.

Le système qui fait l'objet de l'invention permet d'obtenir de meilleurs résultats d'attache, car l'essieu reçoit des tensions moindres de la part du ressort à lames, et de diminuer le nombre et le poids des pièces qui composent l'attache, et le tout du fait que ce système effectue le serrage latéralement, suivant l'axe OZ.

Le système d'attache qui fait l'objet de l'invention consiste dans l'assujettissement/serrage des ressorts à lames au moyen d'une seule bride ou de deux brides de bridage latérales serrées par des goujons ou des vis qui la maintiennent fortement amarrée. Ces brides de bridage seront unies à l'essieu grâce, par exemple, à un cordon de soudure.

La fixation du ressort à lames s'effectue en assujettissant fortement celui-ci par les côtés, d'où, par conséquent, l'importance des mesures de ceux-ci, ce qui ôte de l'importance aux tolérances de la zone plate sur la face de traction, comme c'est le cas pour les ressorts à lames actuels.

Le ressort qui fait l'objet de l'invention se caractérise par le fait qu'il dispose latéralement d'orifices de passage ou aveugles pour la mise en place de moyens mécaniques d'attache latérale du ressort à lames sur l'essieu du véhicule.

Pour mieux comprendre l'objet de la présente invention, on a représenté sur les plans une forme préférentielle de réalisation pratique susceptible de changements accessoires qui n'en dénaturent pas le fondement.

La figure 1 est une représentation schématique du système d'attache actuellement utilisé.

La figure 2 est une représentation schématique d'une réalisation pratique du système d'attache faisant l'objet de l'invention.

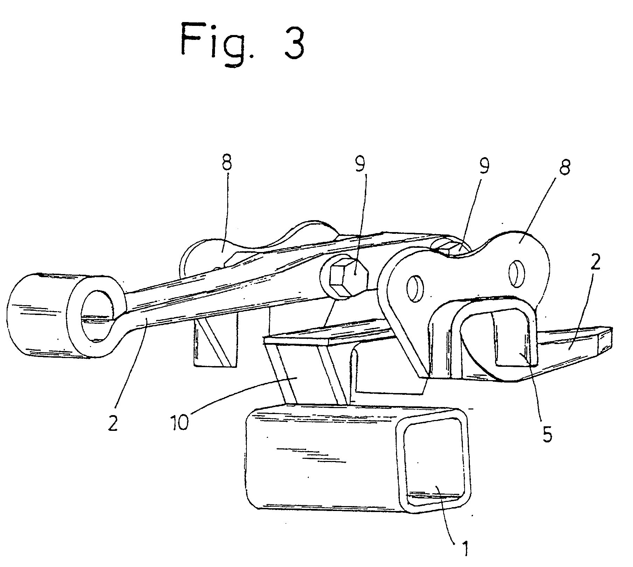

La figure 3 est une représentation éclatée de la figure 2.

On décrit ci-dessous un exemple de réalisation pratique, non limitative, de la présente invention.

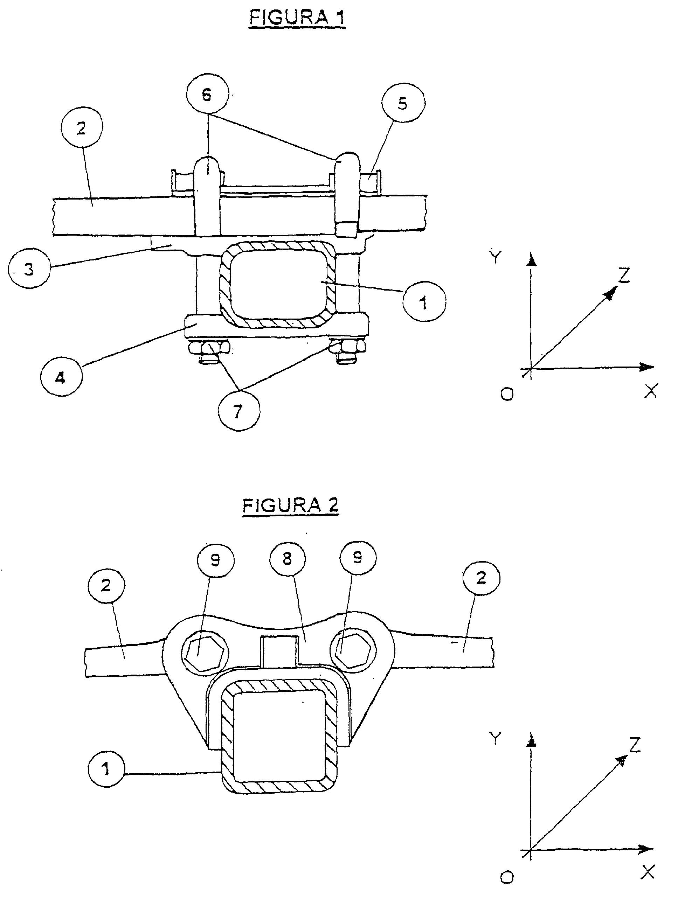

Sur la figure 1, on a représenté un ressort à lames (2) quelconque à assembler à un essieu (1) quelconque, dans ce cas, à section carrée, cette section pouvant être d'un autre type, par exemple, ronde, avec le système d'attache selon l'axe cartésien OY.

Ce système d'attache se compose de:
- Plaque de bridage supérieure (3) et plaque de bridage inférieure (4) qui serrent entre elles l'axe (1).
- Plaque d'attache (5) qui, avec la plaque de bridage supérieure (3) serrent entre elles le ressort à lames (2).
- Colliers (6) à écrous (7) pour serrer l'ensemble.

Avec ce système d'attache, la transmission des efforts entre le ressort à lames et l'essieu est important, les deux faces, supérieure et inférieure du ressort à lames étant unies à l'essieu au moyen du bridage.

Dans le système qui fait l'objet de l'invention, on utilise bien moins de pièces, d'où un ensemble moins lourd, moins compliqué et moins cher, ce qui permet de réduire les efforts sur l'essieu.

Pour tout cela, on dispose d'un système d'attache suivant l'axe cartésien OZ, c'est-à-dire d'attache latérale sur le ressort à lames (2), l'axe OZ étant constitué par l'axe longitudinal de l'essieu (1) du véhicule.

On dispose d'au moins une bride (8) qui est unie de façon rigide à l'essieu (1) et par vissage latéral (9) au ressort à lames (2).

Dans ce système, on disposera, de préférence, de deux brides (8) qui sont serrées, une de chaque côté, contre le ressort à lames (2) au moyen d'au moins deux goujons ou vis (9) et qui fixent entre eux une plaque d'appui (10) entre le ressort à lames (2) et l'essieu (1). On constatera que les goujons / vis (9) traversent le corps de du ressort à lames (2).

Aussi bien les brides (8) que la plaque d'appui (10) ont une surface intérieure (s) se conjuguant avec la forme de l'essieu (1).

L'une des brides (8) ou les deux peuvent disposer d'un prolongement (non représenté) qui s'étend entre le ressort à lames (2) et l'essieu (1) et qui remplit les fonctions d'appui de la plaque d'appui (10).

Les brides (8) seront soudées, de préférence, à l'essieu (1), mais il entre dans l'objet de l'invention qu'elles soient unies à l'essieu (1) par d'autres moyens d'union rigide, par exemple en prolongeant chaque bride (8) autour de l'essieu (1) et en vissant ses bouts inférieurs entre eux, c'est-à-dire en bridant chaque bride (8) à l'essieu (1).

Il entre également dans l'objet de l'invention que ce soit la plaque d'appui (10) qui soit fixée à l'essieu, la/les bride(s) (8) étant unies à cette plaque d'appui (10), car ce cas ne serait pas autre chose qu'une concrétisation de la/des bride(s) (8) avec un prolongement jouant le rôle d'appui.

Le fait que les deux brides (8) et la plaque d'appui (10) forment une pièce unique entre également dans l'objet du Brevet.

## Revendications

1. Système d'attache d'un ressort à lames à un essieu de véhicule et un ressort à lames pour essieu de véhicule, de ceux où, dans une représentation des coordonnées, le ressort est représenté par l'axe de coordonnées OX et l'essieu du véhicule par l'axe des coordonnées OZ, se caractérisant par le fait qu'il comprend, au moins, une bride qui est unie de façon rigide à l'essieu et, latéralement, au ressort à lames, suivant l'axe des coordonnées OZ.

2. Système d'attache d'un ressort à lames à un essieu de véhicule, selon la revendication précédente, se caractérisant par le fait qu'il se compose de deux brides qui sont unies de façon rigide à l'essieu, et unies entre elles par des moyens vissés qui traversent le corps du ressort à lames qui demeure fixé entre les deux brides.

3. Système d'attache d'un ressort à lame à un essieu de véhicule, selon les revendications précédentes, se caractérisant par le fait qu'il se compose d'une plaque d'appui disposée entre les ressort et l'essieu, et fixée entre les deux brides.

4. Système d'attache d'un ressort à lames à un essieu de véhicule, selon la première revendication, se caractérisant par le fait qu'au moins l'une des brides dispose d'un prolongement qui s'étend, en guise d'appui, entre le ressort et l'essieu.

5. Ressort à lames pour essieu de véhicule, selon la première revendication, se caractérisant par le fait qu'il dispose latéralement d'orifices de passage ou aveugles, pour la mise en place de moyens mécaniques de fixation latérale du ressort à lames sur l'essieu du véhicule.
